(19) Europäisches Patentamt
European Patent Office
Office européen des brevets

(11) EP 1 031 614 B1

(12) **EUROPÄISCHE PATENTSCHRIFT**

(45) Veröffentlichungstag und Bekanntmachung des Hinweises auf die Patenterteilung:
**08.01.2003 Patentblatt 2003/02**

(51) Int Cl.[7]: **C09B 43/16**, C09B 67/22, C09D 11/00

(21) Anmeldenummer: **99810158.8**

(22) Anmeldetag: **23.02.1999**

(54) **Monoazofarbstoffe, deren Herstellung und Verwendung**

Monoazo dyes, their production and use

Colorants monoazoiques, leur préparation et leur utilisation

(84) Benannte Vertragsstaaten:
**BE CH DE FR GB IE IT LI**

(43) Veröffentlichungstag der Anmeldung:
**30.08.2000 Patentblatt 2000/35**

(73) Patentinhaber: **ILFORD Imaging Switzerland GmbH**
**1723 Marly 1 (CH)**

(72) Erfinder:
- **Baettig, Kurt**
  **1724 Praroman (CH)**
- **Jan, Gérald, Dr.**
  **1752 Villars-sur-Glâne (CH)**

(56) Entgegenhaltungen:
**EP-A- 0 755 984**
**WO-A-96/24635**
**WO-A-96/24636**
**WO-A-98/12263**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 031 614 B1

## Beschreibung

### Technisches Gebiet

Die Erfindung bezieht sich auf neue Monoazofarbstoffe und ihre Salze, ein Verfahren zu ihrer Herstellung, ihren Einsatz in Färbe- und Druckverfahren sowie auf Farbstoffpräparationen, die diese Farbstoffe enthalten, insbesondere wässrige Tinten für den Tintenstrahldruck.

### Stand der Technik

Beim Tintenstrahldruck sind im wesentlichen zwei Verfahren zu unterscheiden:
Beim kontinuierlichen Tintenstrahldruck wird unter Druck aus einer Düse ein Tintenstrahl erzeugt, der in einem gewissen Abstand von der Düse in einzelne Tröpfchen zerfällt. Die einzelnen Tröpfchen werden je nachdem, ob eine Bildstelle bedruckt werden soll oder nicht, in einen Auffangbehälter abgelenkt oder auf das Aufnahmematerial aufgebracht. Dies geschieht z. B. dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, indem ungeladene Tröpfchen in den Auffangbehälter abgelenkt werden.
Beim nichtkontinuierlichen Verfahren, dem sogenannten "Drop on demand", werden die Tintentropfen nur dann erzeugt, wenn auf Grund der digitalen Daten ein Bildpunkt dargestellt werden muss.

Die wichtigsten Bestandteile einer Tinte für den Tintenstrahldruck sind die Farbstoffe. Obwohl schon eine ganze Anzahl verschiedener Farbstoffe vorgeschlagen worden sind, vermag keiner alle an ihn gestellten Anforderungen zu erfüllen.

Gelbe Monoazofarbstoffe oder Mischungen solcher Farbstoffe und ihre Verwendung in Tinten für den Tintenstrahldruck werden z. B. im Patent US 5'684'140 sowie in den Patentanmeldungen WO 98-12'263, EP 0'567'036 und EP 0'755'984 beschrieben. Auch in den Patentanmeldungen WO 96-24'635 und WO 96-24'636 werden ähnliche Farbstoffe für den Tintenstrahldruck vorgeschlagen.

Der Monoazofarbstoff der Formel (1)

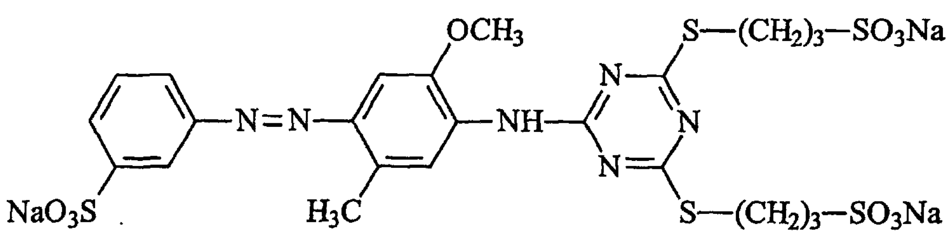

(1)

wird in der Patentanmeldung EP 0'755'984 (Beispiel Nr. 104) beschrieben.

Der Monoazofarbstoff der Formel (2)

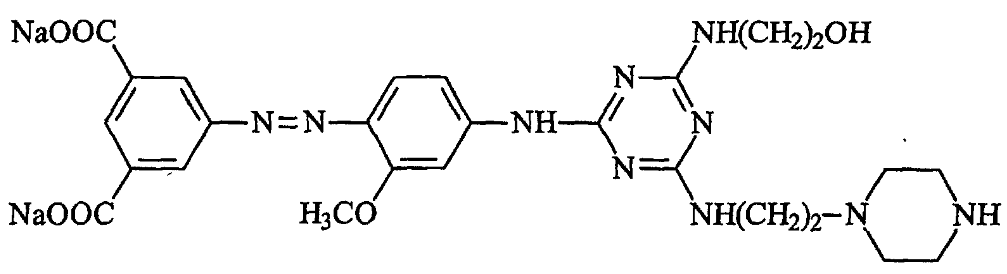

(2)

wird in der Patentanmeldung WO 98-12'263 (Beispiel Nr. 19) beschrieben.

Die beiden hier erwähnten Monoazofarbstoffe und andere strukturell ähnliche Farbstoffe, die in diesem Patent und diesen Patentanmeldungen erwähnt werden und die den Stand der Technik bilden, vermögen jedoch in der Praxis nicht alle gewünschten Anforderungen zu erfüllen, wenn sie in Tinten für den Tintenstrahldruck eingesetzt werden oder wenn es darum geht, mit ihnen Tinten herzustellen, die auf allen möglichen Aufnahmematerialien wie unbeschichtetem oder beschichtetem Papier, beschichtetem oder unbeschichtetem, opakem oder durchsichtigem Kunststoffträger brillante Bilder oder Färbungen mit maximaler Farbwiedergabe (grosser Gamut) zu erzeugen, weil diese gelben Monoazofarbstoffe entweder zu wenig brillant oder zu rotstichig sind.

Farbstoffe für Tinten für den Tintenstrahldruck müssen eine gute Löslichkeit in der mehrheitlich wässrigen Tintenflüssigkeit aufweisen, sie müssen ins Aufnahmematerial eindringen und dürfen keine Aggregation an der Oberfläche des Aufnahmematerials zeigen ("Bronzing"). Sie müssen Bilder mit einer hohen optischen Dichte, einer guten Wasserfestigkeit und einer guten Lichtechtheit ergeben. Sie müssen in der Tinte stabil sein und dürfen sich nicht zersetzen, auch wenn die Tinte lange Zeit unter ungünstigen Bedingungen gelagert wird. Verschiedene Zusammensetzungen für Tinten sind vorgeschlagen worden. Typische Tinten enthalten einen oder mehrere Farbstoffe, Wasser, organische Hilfslösungsmittel und andere Zusätze.

Die Tinten müssen die folgenden Anforderungen erfüllen:

(1) Die Tinte ergibt Bilder hochstehender Qualität auf allen möglichen Aufnahmematerialien.
(2) Die Tinte ergibt Bilder mit guter Wasserfestigkeit.
(3) Die Tinte ergibt Bilder mit guter Lichtbeständigkeit.
(4) Die Tinte ergibt Bilder mit hervorragender Abriebfestigkeit.
(5) Die Tinte verstopft die Tintenstrahldruckerdüsen nicht, auch wenn diese längere Zeit während Druckpausen nicht abgedeckt sind.
(6) Die Tinte kann lange Zeit gelagert werden, ohne dass ihre Qualität abnimmt.
(7) Die physikalischen Eigenschaften der Tinte, wie Viskosität, Leitfähigkeit und Oberflächenspannung liegen alle innerhalb vorgegebener, für die Anwendung geeigneter Grenzen.
(8) Die Tinte muss ungiftig, unbrennbar und unschädlich sein.

**Beschreibung der Erfindung**

Ziel der Erfindung ist die Bereitstellung neuer gelber Monoazofarbstoffe, insbesondere für den Tintenstrahldruck, die brillante Bilder oder Färbungen mit maximaler Farbwiedergabe (grossem Gamut) ergeben und möglichst wenig rotstichig sind.
Ein anderes Ziel der Erfindung ist die Bereitstellung von flüssigen Farbstoffpräparationen, insbesondere von Tinten für den Tintenstrahldruck, die auf allen möglichen Aufnahmematerialien wie unbeschichtetem oder beschichtetem Papier, beschichtetem oder unbeschichtetem, opakem oder durchsichtigem Kunststoffträger eine spektral unveränderte Farbe ergeben.
Ein weiteres Ziel der Erfindung ist die Bereitstellung von Tinten, die alle vorhin erwähnten Anforderungen erfüllen.

Es wurde nun gefunden, dass diese beiden Anforderungen unerwarteterweise von Monoazofarbstoffen befriedigt werden, die mindestens eine Aminoalkansulfonsäuregruppe im Triazinring aufweisen.

Die vorliegende Erfindung bezieht sich auf neue Monoazofarbstoffe der allgemeinen Formel (3)

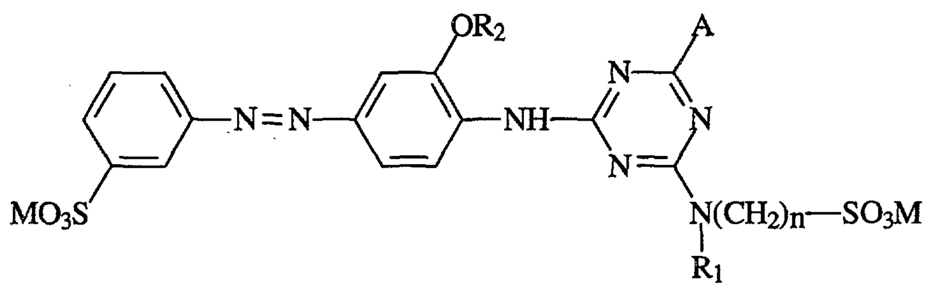

(3)

worin

R1 für Wasserstoff oder Alkyl mit 1 bis 6 C-Atomen steht;

n den Wert 2, 3 oder 4 annimmt;

A für $NR_3R_4$ steht, worin $R_3$ und $R_4$ unabhängig voneinander Wasserstoff; Alkyl mit 1 bis 8 C-Atomen; substituiertes Alkyl mit 2 bis 6 C-Atomen, wobei die Substituenten aus der Gruppe bestehend aus OH, $OCH_3$, COOM und $SO_3M$ ausgewählt werden; Aralkyl; Aryl oder substituiertes Aryl, wobei die Substituenten aus der Gruppe bestehend aus $OCH_3$, Cl, Br, COOM und $SO_3M$ ausgewählt werden; bedeuten, oder worin $R_3$ und $R_4$ einen Ring mit oder ohne Heteroatom bilden;

R2 für Alkyl mit 1 bis 6 C-Atomen steht;

und

M für Wasserstoff, ein Metallkation oder ein Ammoniumkation steht, das gegebenenfalls einen oder mehrere Alkylreste oder substituierte Alkylreste mit jeweils 1 bis 12 C-Atomen aufweist.

Bevorzugt sind Monoazofarbstoffe der Formel (4)

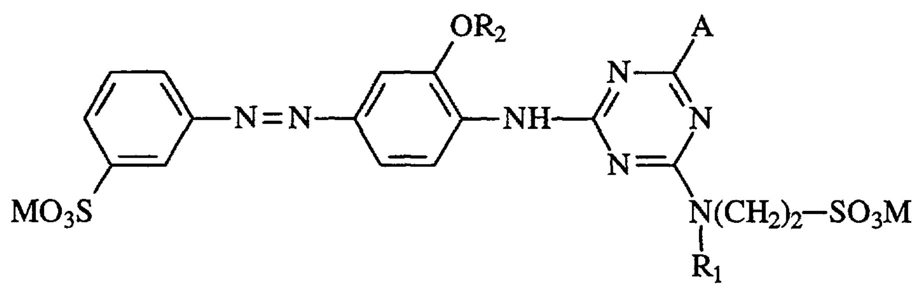

(4)

worin A, $R_1$, $R_2$ und M die vorhin angegebene Bedeutung haben.

Besonders bevorzugt sind Monoazofarbstoffe der Formeln (3) und (4), bei denen A und M die vorhin angegebene Bedeutung haben und worin $R_1$ für Wasserstoff oder $CH_3$ und $R_2$ für $CH_3$ oder $CH_2CH_3$ steht und n bei Monoazofarbstoffen der Formel (3) den Wert 2, 3 oder 4 annimmt.

Besonders bevorzugt sind weiterhin Monoazofarbstoffe der Formeln (3) und (4), bei denen M, $R_1$ und $R_2$ die vorhin angegebene Bedeutung haben und worin A für $NR_3R_4$ steht, worin $R_3$ und $R_4$ unabhängig voneinander Wasserstoff; Alkyl mit 1 bis 4 C-Atomen; substituiertes Alkyl mit 2 bis 4 C-Atomen, wobei die Substituenten aus der Gruppe bestehend aus OH, $OCH_3$, COOM und $SO_3M$ ausgewählt werden; bedeuten und n bei Monoazofarbstoffen der Formel (3) den Wert 2, 3 oder 4 annimmt.

Speziell bevorzugt sind Monoazofarbstoffe der Formel (4), bei denen M, $R_1$ und $R_2$ die vorhin angegebene Bedeutung haben und worin A für $NHCH_2CH_2SO_3M$ oder $N(CH_3)CH_2CH_2SO_3M$ steht.

Die Monoazofarbstoffe der Formeln (3) und (4) können als freie Säuren oder als anorganische oder organische Salze dieser Säuren vorliegen. Vorzugsweise liegen sie in Form ihrer Alkali- oder Ammonium-Salze vor, wobei das Ammoniumkation substituiert sein kann. Beispiele solcher substituierter Ammoniumkationen sind 2-Hydroxyethylammonium, Bis-(2-hydroxyethyl)-ammonium, Tris-(2-hydroxyethyl)-ammonium, Bis-(2-hydroxyethyl)-methyl-ammonium, Tris-[2-(2-methoxyethoxy)-ethyl]-ammonium, 8-Hydroxy-3,6-dioxaoctylammonium und Tetraalkylammonium wie z. B. Tetramethylammonium oder Tetrabutylammonium.

Weiter betrifft die Erfindung nicht nur reine Monoazofarbstoffe der Formeln (3) und (4), sondern auch Gemische dieser Farbstoffe.

Die Erfindung betrifft weiterhin ein Verfahren zur Herstellung der Monoazofarbstoffe der allgemeinen Formel (3), das dadurch gekennzeichnet ist, dass

(i) eine Verbindung der allgemeinen Formel (5)

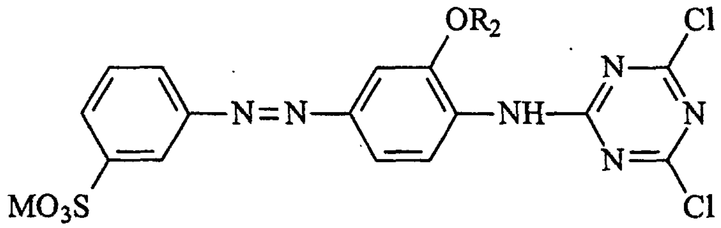

(5)

worin M und $R_2$ die gleiche Bedeutung wie vorhin angegeben haben, mit einer Verbindung der Formel (6)

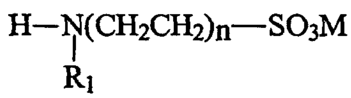

(6)

worin n und $R_1$ die vorhin angegebene Bedeutung haben, unter Bedingungen umgesetzt wird, dass eines der Chloratome des Dichlortriazins der Formel (5) durch die Verbindung der Formel (6) ersetzt wird;
und

(ii)das disubstituierte Triazin mit einer Verbindung der allgemeinen Formel (7)

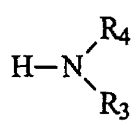

(7)

worin $R_3$ und $R_4$ die vorhin angegebene Bedeutung haben, unter Bedingungen umgesetzt wird, dass das dritte Chloratom des Triazinrings durch die Verbindung der Formel (7) ersetzt wird.

Wenn die beiden Substituenten am Triazinring identisch sind, können die beiden Reaktionsschritte i) und ii) auch kombiniert werden.

Die erfindungsgemässen Monoazofarbstoffe der Formel (3) färben cellulosehaltige Materialien, Papier, Baumwolle und Viskose sowie Leder und Wolle mit guten Nass- und Lichtechtheiten.

Die Monoazofarbstoffe können nach allen in der Papier- und Textilindustrie für Substantivfarbstoffe gebräuchlichen Verfahren verwendet werden, insbesondere in der Massen- wie in der Oberflächenbehandlung von Papier für geleimte oder ungeleimte Sorten. Sie können auch in der Garn- und Stückfärberei von Baumwolle, Viskose und Leinen nach dem Ausziehverfahren oder im kontinuierlichen Verfahren angewandt werden.

Die Erfindung betrifft weiter flüssige Farbstoffpräparationen enthaltend mindestens einen Monoazofarbstoff der Formel (3). Diese Anwendungsform ist insbesondere beim Färben von Papier bevorzugt. Die Herstellung von stabilen, flüssigen, vorzugsweise wässrigen, konzentrierten Färbepräparaten kann auf allgemein bekannte Weise erfolgen, vorteilhaft durch Lösen in geeigneten Lösungsmitteln. Von besonderem Vorteil ist die Herstellungsmöglichkeit solcher stabilen, wässrigkonzentrierten Präparationen im Zuge der Farbstoffsynthese selbst ohne Zwischenisolierung des Farbstoffs.

Monoazofarbstoffe oder Mischungen von Monoazofarbstoffen der allgemeinen Formeln (3) und (4) sind ausgezeichnete Farbstoffe zur Herstellung von Tinten für den Tintenstrahldruck.

Eine solche Tinte enthält eine oder mehrere der erfindungsgemässen Monoazofarbstoffe in einem flüssigen,

vorwiegend wässrigen Lösungsmittel. Die Tinte enthält 0,5 bis 20 Gewichtsprozent, vorzugsweise 0,5 bis 5 Gewichtsprozent dieser Monoazofarbstoffe, bezogen auf das Gesamtgewicht der Tinte. Das flüssige Lösungsmittel besteht vorzugsweise aus Wasser oder aus einer Mischung von Wasser und mit Wasser mischbaren organischen Lösungsmitteln. Geeignete Lösungsmittel sind z. B. in den Patenten US 4'626'284, US 4'703'113, US 4'963'189 und den Patentanmeldungen GB 2'289'473 sowie EP 0'425'150 und EP 0'597'672 beschrieben.

Die vorliegende Erfindung wird durch die folgenden Beispiele näher beschrieben, ohne dass dadurch die beanspruchten Verbindungen in irgendeiner Weise eingeschränkt werden.

**Beispiele**

**Beispiel 1**

Der Monoazofarbstoff (100) aus Tabelle 1 wurde folgendermassen hergestellt:

Lösung A:

84.7 g (0.6 Mol) des Natriumsalzes der Hydroxymethansulfonsäure wurden zusammen mit 69.8 ml (0.6 Mol) o-Anisidin in 250 ml Wasser während 1 Stunde bei 60°C gerührt. So wurde eine wässrige Lösung der Verbindung der Formel (8) erhalten.

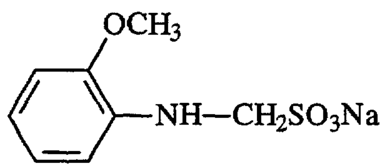

(8)

Suspension B:

107.1 g (0,6 Mol) Metanilsäure wurden in 200 ml Wasser suspendiert, unter Rühren wurden 120 ml wässrige Salzsäurelösung (37 %) zugegeben und auf eine Temperatur zwischen 0° und 5° C abgekühlt. Bei einer Innentemperatur von 0° - 5° C wurde unter Rühren innert 60 Minuten 150 ml einer wässrigen Natriumnitritlösung (4N) zugegeben. Anschliessend wurde 1 Stunde bei dieser Temperatur weitergerührt. Die im Überschuss vorhandene salpetrige Säure wurde anschliessend durch Reaktion mit Sulfaminsäure entfernt. Solchermassen wurde eine wässrige Suspension des Metanilsäurediazoniumsalzes erhalten.

Herstellung des Farbstoffs der Formel (9):

Bei einer Innentemperatur von 5° - 10° C wurde unter Rühren innert 60 Minuten die kalte Lösung A zur Suspension B zudosiert und der pH-Wert durch gleichzeitiges Zudosieren von Natronlauge (20 %) bei 2 - 4 gehalten. Nach beendeter Addition wurde 2 Stunden bei 5° - 20° C und anschliessend 16 Stunden bei Raumtemperatur weitergerührt. Der Farbstoff wurde durch Zugabe von Natriumchlorid ausgesalzen, abfiltriert und durch Waschen mit Wasser / Ethanol gereinigt. Man erhielt so 105 g des Farbstoffs der Formel (9).

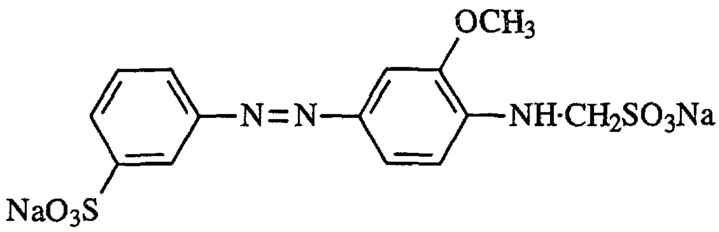

(9)

Lösung C:

17,8 g (40 mMol) des Farbstoffs der Formel (9) wurden mit 70 ml Wasser und 6 ml NaOH (30 %) 1 Stunde bei 90° C gerührt. Man erhielt so eine wässrige Lösung der Verbindung der Formel (10)

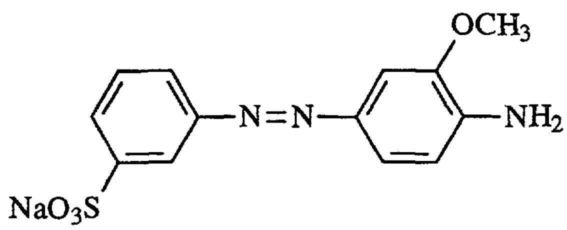

(10)

Herstellung des Monoazofarbstoffs (100):

Bei einer Innentemperatur von 5° - 10° C wurde unter Rühren innert 60 Minuten die kalte Lösung C zur Suspension von 8.2 g (44 mMol) Cyanurchlorid in 80 ml Wasser zudosiert und der pH-Wert durch Zudosieren von Natronlauge (20 %) zwischen 6 und 8 gehalten. Nach beendeter Zugabe wurde 2 Stunden bei 5° - 20° C und anschliessend 2 Stunden bei Raumtemperatur weitergerührt. Zur gebildeten Suspension gab man eine Lösung von 23.7 g (160 mMol) des Taurin-Natrium-Salzes in 100 ml Wasser. Nach beendeter Zugabe wurde 18 Stunden bei 80° C und einem pH-Wert von 10 weitergerührt. Anschliessend wird die Lösung auf Raumtemperatur abgekühlt und der Farbstoff durch Zugabe von Natriumchlorid ausgesalzen, abfiltriert und durch zweimaliges Umfällen aus Wasser / Ethanol gereinigt. Man erhielt 13 g des Farbstoffs der Formel (100).

Auf ähnliche Art und Weise können durch Wahl geeigneter Ausgangsmaterialien die Monoazofarbstoffe (100) bis (105) hergestellt werden.

Die so hergestellten erfindungsgemässen Monoazofarbstoffe sind in Tabelle 1 zusammen mit der Lage ihres Absorptionsmaximums zusammengestellt.

| Farbstoff | $R_1$ | A | $R_2$ | M | $\lambda_{max}$ (nm) in $H_2O$ |
|---|---|---|---|---|---|
| (100) | H | $NH(CH_2)_2SO_3M$ | $CH_3$ | Na | 387 |
| (101) | H | $NH(CH_2)_2SO_3M$ | $CH_2CH_3$ | K | 386 |
| (102) | $CH_3$ | $N(CH_3)(CH_2)_2SO_3M$ | $CH_3$ | Na | 393 |
| (103) | H | $N(CH_2CH_2OH)_2$ | $CH_3$ | Na | 391 |
| (104) | $CH_3$ | $N(CH_2CH_2OH)_2$ | $CH_3$ | Na | 392 |
| (105) | H | 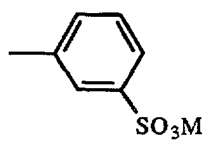 | $CH_3$ | Na | 388 |

Tabelle 1

### Herstellungsbeispiel für Tinten

Die vorliegende Erfindung wird, soweit sie sich auf Tinten bezieht, durch die folgenden Beispiele beschrieben, in denen erfindungsgemässe Monoazofarbstoffe aus Tabelle 1 und Monoazofarbstoffe des bisherigen Stands der Technik eingesetzt werden. 100 g jeder Tinte wurden hergestellt, indem die benötigte Menge Farbstoff (2-5 g), Glycerin (5g), Ethylenglykol (5g) und eine Biocid-Lösung (Promexal X50, erhältlich bei Zeneca, Manchester, England) (1.2g) zusammen mit Wasser etwa 1 Stunde unter Rühren auf 50° C erwärmt wurden. Die erhaltene Lösung wurde auf 20° C abgekühlt, ihr pH-Wert auf 7.5 eingestellt und anschliessend durch ein Millipore®-Filter mit 0.5 µm Porendurchmesser filtriert. Die Farbstoffmenge wurde so gewählt, dass die optische Dichte des bedruckten Bildes für alle Farbstoffe gleich war.

### Anwendungsbeispiele von Tinten

Die Tinten wurden anschliessend mit Hilfe eines Tintenstrahldruckers des Typs HP560 von Hewlett-Packard auf die beiden Aufnahmematerialien Ilfojet Standard Media Glossy SMGP7 und Ilfojet Standard Media Clear Film SMCF7 (beide Materialien sind erhältlich bei ILFORD Imaging Switzerland GmbH, Fribourg, Schweiz) aufgebracht. Anschliessend wurden an den bedruckten Mustern die Farbkoordinaten bestimmt und daraus die Farbsättigung berechnet.

### Farbkoordinaten

L*a*b*-Werte wurden auf bedruckten Mustern mit Hilfe eines Spektrometers Spectrolino, erhältlich bei Gretag / Macbeth, Regensdorf, Schweiz, gemessen. Rotstichige Gelbfarbstoffe haben einen positiven a*-Wert, grünstichige einen negativen a*-Wert.

### Sättigung

Die Sättigung C* wurde aus den gemessenen Farbkoordinaten nach der Formel

$$C^* = \sqrt{a^{*2}+b^{*2}}$$

berechnet. Brillante Farbstoffe haben einen hohen C*-Wert.

Die L*a*b*-Werte (Lichtart D65) und die berechneten Sättigungswerte für ein opakes (SMGP7) und ein transparentes Aufnahmematerial (SMCF7) sind in Tabelle 6 zusammengestellt.

Tabelle 6

| Farbstoff | L*a*b*-Werte (SMGP7) | C*-Wert (SMGP7) | L*a*b*-Werte (SMCF7) | C*-Wert (SMCF7) |
|---|---|---|---|---|
| (100) | 85.1 / -2.6 / 108.4 | 111.7 | 89.5 / -11.0 / 102.7 | 103.3 |
| (102) | 85.3 / -3.1 / 107.5 | 110.7 | 89.5 / -11.5 / 100.7 | 101.4 |
| (103) | 85.5 / -4.1 / 102.5 | 107.6 | 89.9 / -12.6 / 99.4 | 100.2 |
| (1) | 85.1 / 4.5 / 101.6 | 104.9 | 89.8 / -6.0 / 98.6 | 98.8 |

Ein Vergleich der berechneten C*-Werte von bedruckten Mustern in Tabelle 6 zeigt klar, dass Tinten mit den erfindungsgemässen Monoazofarbstoffen (100), (102) und (103) eine deutlich höhere Brillanz zeigen als eine Tinte, die den bekannten Monoazofarbstoff (1) aus der Patentanmeldung EP 0'755'984 enthält.

Aus Tabelle 6 kann ebenfalls entnommen werden, dass die erfindungsgemässen Farbstoffe deutlich weniger rotstichig (a*-Werte zwischen -2.6 und -4.1) sind als der bekannte Farbstoff (1) mit einem a*-Wert von +4.5.

## Patentansprüche

1. Monoazofarbstoffe der Formel (3)

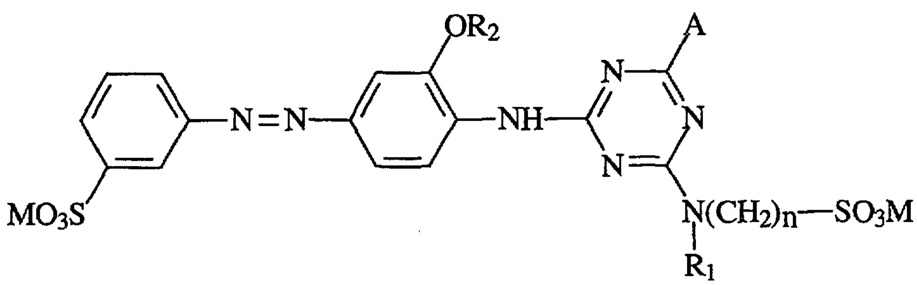

(3)

worin

$R_1$ für Wasserstoff oder Alkyl mit 1 bis 6 C-Atomen steht;

n den Wert 2, 3 oder 4 annimmt;

A für $NR_3R_4$ steht, worin $R_3$ und $R_4$ unabhängig voneinander Wasserstoff; Alkyl mit 1 bis 8 C-Atomen; substituiertes Alkyl mit 2 bis 6 C-Atomen, wobei die Substituenten aus der Gruppe bestehend aus OH, $OCH_3$, COOM und $SO_3M$ ausgewählt werden; Aralkyl; Aryl oder substituiertes Aryl, wobei die Substituenten aus der Gruppe bestehend aus $OCH_3$, Cl, Br, COOM und $SO_3M$ ausgewählt werden, bedeuten; oder worin $R_3$ und $R_4$ einen Ring mit oder ohne Heteroatom bilden;

$R_2$ für Alkyl mit 1 bis 6 C-Atomen steht;

und

M für Wasserstoff, ein Metallkation oder ein Ammoniumkation steht, das gegebenenfalls einen oder mehrere Alkylreste oder substituierte Alkylreste mit jeweils 1 bis 12 C-Atomen aufweist.

2. Monoazofarbstoffe nach Anspruch 1, **dadurch gekennzeichnet, dass**

A, $R_1$, $R_2$ und M die gleiche Bedeutung wie in Anspruch 1 haben

und

n den Wert 2 annimmt.

**3.** Monoazofarbstoffe nach Anspruch 2, **dadurch gekennzeichnet, dass**

A und M die gleiche Bedeutung wie in Anspruch 1 haben;
$R_1$ für Wasserstoff oder $CH_3$ steht

und

$R_2$ für $CH_3$ oder $CH_2CH_3$ steht.

**4.** Monoazofarbstoffe nach Anspruch 2, **dadurch gekennzeichnet, dass**

M, $R_1$ und $R_2$ die gleiche Bedeutung wie in Anspruch 1 haben

und

A für $NR_3R_4$ steht, worin $R_3$ und $R_4$ unabhängig voneinander Wasserstoff, Alkyl mit 1 bis 8 C-Atomen; substituiertes Alkyl mit 2 bis 6 C-Atomen, wobei die Substituenten aus der Gruppe bestehend aus OH, $OCH_3$, COOM und $SO_3M$ ausgewählt werden; bedeuten.

**5.** Monoazofarbstoffe nach Anspruch 2, **dadurch gekennzeichnet, dass**

M, $R_1$ und $R_2$ die gleiche Bedeutung wie in Anspruch 1 haben

und

A für $NHCH_2CH_2SO_3M$ oder $N(CH_3)CH_2CH_2SO_3M$ steht.

**6.** Verfahren zur Herstellung der Monoazofarbstoffe der allgemeinen Formel (3), das **dadurch gekennzeichnet ist, dass**

(i) eine Verbindung der allgemeinen Formel (5)

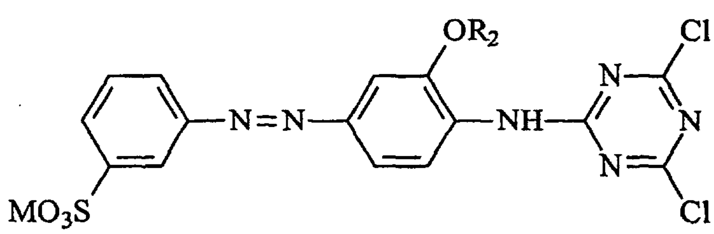

(5)

worin M und $R_2$ die gleiche Bedeutung wie in Anspruch 1 haben,
mit einer Verbindung der Formel (6)

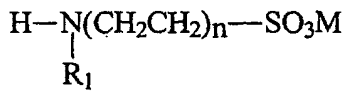

(6)

worin n und $R_1$ die die gleiche Bedeutung wie in Anspruch 1 haben,
unter Bedingungen umgesetzt wird, dass eines der Chloratome des Dichlortriazins der Formel (5) durch die Verbindung der Formel (6) ersetzt wird;
und
(ii)das disubstituierte Triazin mit einer Verbindung der allgemeinen Formel (7)

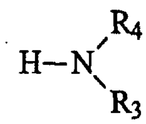

(7)

worin $R_3$ und $R_4$ die die gleiche Bedeutung wie in Anspruch 1 haben, unter Bedingungen umgesetzt wird, dass das dritte Chloratom des Triazinrings durch die Verbindung der Formel (7) ersetzt wird.

**7.** Verwendung von Monoazofarbstoffen gemäss einem oder mehreren der Ansprüche 1 bis 5 zum Färben von cellulosehaltigen Materialien, Papier, Baumwolle, Viskose, Leder und Wolle.

**8.** Flüssige Farbstoffpräparationen, die mindestens einen Monoazofarbstoff oder eine Mischung von Monoazofarbstoffen nach einem oder mehreren der Ansprüche 1 bis 5 enthalten.

**9.** Tinten für den Tintenstrahldruck, die mindestens einen Monoazofarbstoff oder eine Mischung von Monoazofarbstoffen nach einem oder mehreren der Ansprüche 1 bis 5 enthalten.

**10.** Tinten für den Tintenstrahldruck, die zusätzlich zu einem Monoazofarbstoff oder einer Mischung von Monoazofarbstoffen nach einem oder mehreren der Ansprüche 1 bis 5 einen oder mehrere weitere Farbstoffe enthalten.

## Claims

**1.** Monoazo dyes of formula (3)

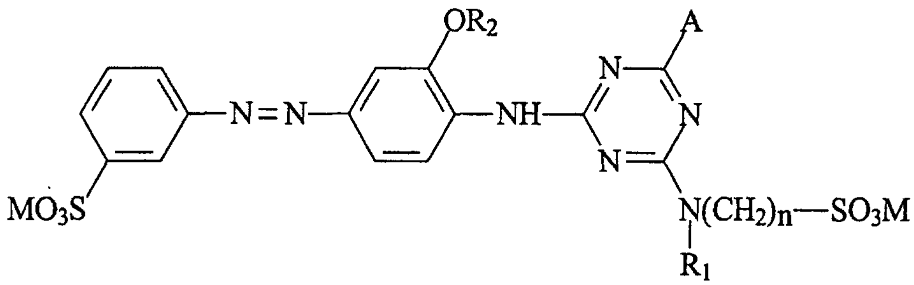

(3)

wherein

$R_1$ represents hydrogen or alkyl with 1 to 6 C atoms;
n is 2, 3 or 4;
A represents $NR_3R_4$, wherein $R_3$ and $R_4$ independently represent hydrogen; alkyl with 1 to 8 C atoms; substituted alkyl with 2 to 6 C atoms, where the substituents are selected from the group consisting of OH, $OCH_3$, COOM and $SO_3M$; aralkyl; aryl or substituted aryl, where the substituents are selected from the group consisting of $OCH_3$, Cl, Br, COOM and $SO_3M$; or where $R_3$ and $R_4$ together form a ring with or without a hetero atom;
$R_2$ represents alkyl with 1 to 6 C atoms

and

M represents hydrogen, a metal cation or an ammonium cation, which may be substituted by one or more alkyl or substituted alkyl groups each having from 1 to 12 C atoms.

**2.** Monoazo dyes according to claim 1, wherein

A, $R_1$, $R_2$ and M are as defined in claim 1

and

n is equal to 2.

**3.** Monoazo dyes according to claim 2, wherein

A and M are as defined in claim 1;
$R_1$ represents hydrogen or $CH_3$

and

$R_2$ represents $CH_3$ or $CH_2CH_3$.

**4.** Monoazo dyes according to claim 2, wherein

M, $R_1$ and $R_2$ are as defined in claim 1

and

A represents $NR_3R_4$, wherein $R_3$ and $R_4$ independently represent hydrogen; alkyl with 1 to 8 C atoms; substituted alkyl with 2 to 6 C atoms, where the substituents are selected from the group consisting of OH, $OCH_3$, COOM and $SO_3M$.

**5.** Monoazo dyes according to claim 2, wherein

M, $R_1$ and $R_2$ are as defined in claim 1

and

A represents $NHCH_2CH_2SO_3M$ or $N(CH_3)CH_2CH_2SO_3M$.

**6.** Process for the preparation of monoazo dyes of formula (3), wherein

(i) a compound of general formula (5)

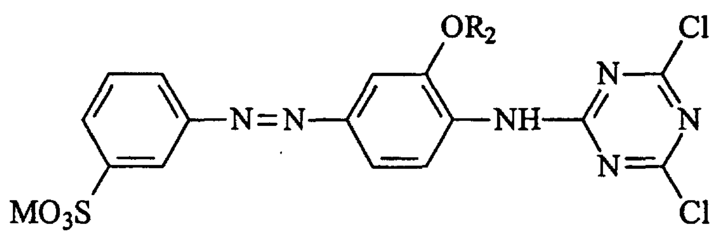

(5)

wherein M and $R_2$ are as defined in claim 1,
is reacted with a compound of formula (6)

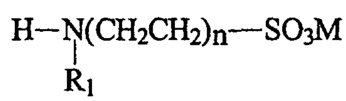

(6)

wherein n and $R_1$ are as defined in claim 1,
under conditions that one of the chlorine atoms of the dichlorotriazine of formula (5) is replaced by the compound of formula (6);
and
(ii)the disubstituted triazine is reacted with a compound of general formula (7)

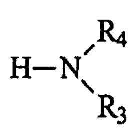

(7)

wherein $R_3$ and $R_4$ are as defined in claim 1,
under conditions that the third chlorine atom of the triazine ring is replaced by the compound of formula (7).

**7.** Process for dyeing cellulose containing materials, paper, cotton, viscose, leather and wool by applying thereto a

monoazo dye according to anyone of claims 1 to 5.

**8.** Liquid dye preparations comprising at least one monoazo dye or a mixture of monoazo dyes according to anyone of claims 1 to 5.

**9.** Inks for ink jet printing, comprising at least one monoazo dye or a mixture of monoazo dyes according to anyone of claims 1 to 5.

**10.** Inks for ink jet printing, comprising in addition to at least one monoazo dye or a mixture of monoazo dyes according to anyone of claims 1 to 5 one or more other dyes.

**Revendications**

**1.** Colorants monoazoïques de formule générale (3)

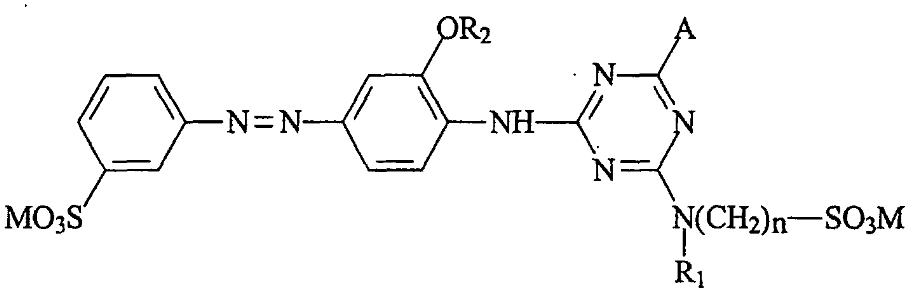

(3)

dans laquelle

$R_1$ représente un atome d'hydrogène ou un radical alkyle ayant de 1 à 6 atomes de carbone;

n vaut 2, 3 ou 4;

A représente $NR_3R_4$, où $R_3$ et $R_4$ représentent indépendamment un atome d'hydrogène, un radical alkyle ayant de 1 à 8 atomes de carbone, un radical alkyle substitué ayant de 2 à 6 atomes de carbone, dans lequel les substituants sont choisis parmi le groupe constitué du radical OH, du radical $OCH_3$, du radical COOM et du radical $SO_3M$; un radical aralkyle; un radical aryle ou un radical aryle substitué, dans lequel les substituants sont choisis parmi le groupe constitué du radical $OCH_3$, du radical Cl, du radical Br, du radical COOM et du radical $SO_3M$; ou dans lequel $R_3$ et $R_4$ ensemble forment un cycle avec ou sans inclusion d'un héteroatome;

$R_2$ représente un radical alkyle ayant de 1 à 6 atomes de carbone;

et

M représente un atome d'hydrogène, un cation métallique ou un cation ammonium optionnellement substitué par un plusieurs radicaux alkyle ou alkyle substitué ayant chacun de 1 à 12 atomes de carbone.

**2.** Colorants monoazoïques selon la revendication 1, dans lesquelles

A, $R_1$, $R_2$ et M sont définis comme à la revendication 1

et

n vaut 2.

**3.** Colorants monoazoïques selon la revendication 2, dans lesquelles

A et M are sont définis comme à la revendication 1;
$R_1$ représente un atome d'hydrogène ou un radical $CH_3$

et

$R_2$ représente un radical $CH_3$ ou un radical $CH_2CH_3$.

**4.** Colorants monoazoïques selon la revendication 2, dans lesquelles

M, $R_1$ et $R_2$ sont définis comme à la revendication 1

et

A représente $NR_3R_4$, où $R_3$ et $R_4$ représentent indépendamment un atome d'hydrogène, un radical alkyle ayant de 1 à 8 atomes de carbone, un radical alkyle substitué ayant de 2 à 6 atomes de carbone, dans lequel les substituants sont choisis parmi le groupe constitué du radical OH, du radical $OCH_3$, du radical COOM et du radical $SO_3M$.

**5.** Colorants monoazoïques selon la revendication 2, dans lesquelles

M, $R_1$ et $R_2$ sont définis comme à la revendication 1

et

A représente un radical $NHCH_2CH_2SO_3M$ ou un radical $N(CH_3)CH_2CH_2SO_3M$.

**6.** Procédé de préparation des colorants monoazoïques de formule générale (3), où

(i) on fait réagir un composé de formule générale (5)

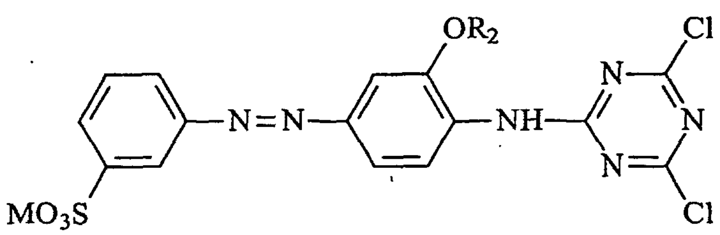

(5)

dans lequel M et $R_2$ sont définis comme à la revendication 1,
avec un composé de formule (6)

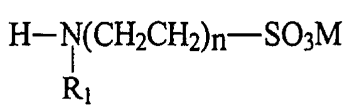

(6)

dans lequel n et $R_1$ sont définis comme à la revendication 1,
dans des conditions telles qu'une des atomes de chlore du composé dichlorotriazine de formule (5) soit remplacé par le composé de formule (6);
et
(ii)on fait réagir le composé chlorotriazine disubstitué avec un composé de formule générale (7)

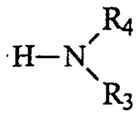

(7)

dans lequel $R_3$ et $R_4$ sont définis comme à la revendication 1,
dans des conditions telles que la troisième atome de chlore du cycle triazine soit remplacé par le composé de formule (7).

**7.** Utilisation des colorants monoazoïques selon une ou plusieurs des revendications 1 à 5 pour la teinture des matériaux cellulosiques, du papier, du coton, de la viscose, du cuir et de la laine.

**8.** Préparations liquides contenant au moins un colorant monoazoïque ou un mélange de colorants monoazoïques selon une ou plusieurs des revendications 1 à 5.

**9.** Encres d'impression selon la méthode du jet d'encre qui comprennent au moins un colorant monoazoïque ou un mélange de colorants monoazoïques selon une ou plusieurs des revendications 1 à 5.

**10.** Encres d'impression selon la méthode du jet d'encre qui comprennent, à coté d'au moins un colorant monoazoïque ou un mélange de colorants monoazoïques selon une ou plusieurs des revendications 1 à 5 un ou plusieurs colorants supplémentaires.